# EUROPEAN PATENT SPECIFICATION

(11) **EP 1 647 577 B1**
(45) Date of publication and mention of the grant of the patent: **07.04.2010**
(21) Application number: 05109055.3
(22) Date of filing: 30.09.2005
(51) Int. Cl.: C08L 75/04, E01C 13/08

(54) **Elastomerized particulate to be used as an infill for synthetic turfs**
Elastomere Partikel zur Verwendung als Füllung für synthetischen Rasensoden.
Particles elastomères pour le remplissage du gazon artficiel

(30) Priority: 14.10.2004 IT PD20040251
(43) Date of publication of application: 19.04.2006
(73) Proprietor: A.P.I. Applicazioni Plastiche Industriali S.P.A., 36065 Mussolente VI (IT)
(72) Inventor: Brunetti, Sergio, 36061, Bassano Del Grappa VI (IT)
(74) Representative: Modiano, Micaela Nadia

(56) References cited:
- WO-A-02/09825
- WO-A-99/63162
- DE-A1- 19 858 906
- US-A- 4 420 513

## Description

The present invention relates to an elastomerized particulate to be used as an infill for synthetic turfs.

The present invention also relates to a method for producing said elastomerized particulate.

Playing fields made of artificial grass have become increasingly popular in recent years.

The reasons for this growth are linked substantially to the lower maintenance of the field with respect to natural-grass fields, to a more uniform surface, and to the possibility to use the field even in winter periods and in enclosed spaces.

Such sports fields made of artificial grass are generally constituted by layers of heavy materials (sand, mineral fillers) on textile substrates tufted with polyolefin fibers capable of imitating natural grass.

The purpose of these layers of heavy materials is to "support" laterally the tufted fibers.

However, the use of these heavy materials is not ideal in order to imitate natural turf.

These materials in fact give the synthetic turf a low elastic response ("rebound"), which in the long term is traumatizing for athletes who run on it.

Further, said heavy materials are highly abrasive in case of falls onto the turf, causing unpleasant skin injuries to the athlete.

In order to obviate these drawbacks, alternative filler materials have been studied and the predominant orientation has been toward the use of polymeric materials.

It has been understood that physical factors such as the bulk density and physical shape of the particulate, in addition to the chemical composition of the material, also contribute to achieving the elasticity characteristics sought for the artificial turf.

These last two factors, bulk density and physical shape, are substantially linked to each other, since bulk density is influenced by the physical shape of the particulate.

Bulk density, in combination with the elastic properties of the material, contributes to define the elastic response of the turf.

The value of this elastic response is a fundamental factor for approval of the turf by sports federations.

The chemical composition of the material is an important factor in the production of said particulate.

Solutions are in fact known which have particulate having an irregular shape, constituted by a polymeric material with the addition of inorganic fillers, for example from US3995079,US438935 and US5976645.

Due to the irregular shape and chemical composition, said particulate, by way of the abrasive mechanical action caused by the treading of athletes, forms fine dust, which spreads into the surrounding environment, with evident ecological damage and physiological damage for the athletes who inhale it.

It has thus been understood from these experiences that the particulate must have a certain resistance to abrasion.

Two great groups of materials are currently used to provide this particulate: cross-linked materials (e.g., vulcanized rubber) and thermoplastic materials (e.g., PVC, copolymers SBS, SEBS, SEPS, elastomerized polyolefins, thermoplastic polyurethanes).

Cross-linked materials are preferred due to their low cost, but because of their particularity, they have the drawback of being substantially impossible to recycle and the drawback of low flexibility in formulation, since they are subjected to the constraints imposed by the cross-linking process.

Generally, the particulate derived from these cross-linked materials is obtained by milling (for example recycled tires) and particle size selection.

Due to their chemical and physical characteristics, even with an irregular shape, the particulates produced with cross-linked materials do not form dust.

Thermoplastic materials have higher costs than cross-linked materials, but are entirely recyclable and allow considerable flexibility in formulation, so as to be able to select chemical and physical characteristics which are suitable for the application.

However, the thermoplastic particulates that are used, by way of the extrusion processes by means of which they are provided, lead to a regular form factor; the typical shape of these particulates is in fact cylindrical or spheroidal. WO99/63162 A teaches about construction materials suitable for use as, or in, a wearing course for children's play areas, games areas and like purposes, comprise an agglomerate of granules of a thermoplastic elastomer. The thermoplastic elastomer is, for example, a polyurethane or a block copolymer of the styrene type, for example a styrene-butadiene-styrene block copolymer. The granules of the thermoplastic elastomer are preferably angular granules or multi-facet granules. DE19858906 (A1) illustrates a polyurethane (PU) powder with a bulk density of less than 0.65 g/cm³ used as an anti-caking agent for synthetic elastomers, and a process for the production of synthetic elastomers by granulating the elastomer and mixing it with such poly-urethane powder as anti-caking agent during or after granulation.
Moreover, DE19858906 A1 discloses granules of a thermoplastic polyurethane elastomer based on polyether diols or polyester diols having a bulk density of 0.44 g/cm³.

A regular form factor leads to high apparent densities, but at the same time causes the turf that contains said particulate to be slippery.

The aim of the present invention is to provide an elastomerized particulate, suitable to be used as an infill for synthetic turfs, which solves the drawbacks observed in the use of known types of particulate.

Within this aim, an object of the present invention is to provide an elastomerized particulate, suitable to be used as an infill for synthetic turfs, which increases the elasticity of the turf with respect to the elasticity provided by known types of particulate.

Another object of the present invention is to provide an elastomerized particulate, suitable to be used as an infill for synthetic turfs, which extends the life of said particulate.

Another object of the present invention is to provide an elastomerized particulate, suitable to be used as an infill for synthetic turfs, which has lower specific gravities than known types of particulate.

Another object of the present invention is to provide an elastomerized particulate, suitable to be used as an infill for synthetic turfs, which can be recycled.

Another object of the present invention is to provide a simple and low-cost method for achieving the most suitable form factor for elastomerized particulate suitable to be used as an infill for synthetic turfs.

This aim and these and other objects, which will become better apparent hereinafter, are achieved by an elastomerized particulate, suitable to be used as an infill for synthetic turfs, characterized in that it is made of thermoplastic polyurethane, has an irregular form factor, and has a bulk density comprised between 0.40 g/ml and 0.80 g/ml, said particulate comprising the following components:
- an ester- and/or other-based polyurethane in a quantity from 10 to 70% by weight of the particulate,
- styrene-based compatibilized elastomerizing derivatives, in an amount from 5 to 20% by weight of the particulate,
- mineral fillers in an amount from 10 to 60% by weight of the particulate.

Further characteristics and advantages of the present invention will become better apparent from the description of a preferred but not exclusive formulation thereof, illustrated hereinafter.

Said particulate suitable to be used as an infill for synthetic turfs is of the elastomerized type and is formed mainly by thermoplastic polyurethane having an ester and/or ether base.

Conveniently, the particulate thus composed has an abrasion resistance of less than 400 mm³ according to the DIN 53516 standard (this standard calculates the volume of material removed by abrasion, and therefore the lower the value, the higher the abrasion, resistance).

Advantageously, the thermoplastic polyurethane that forms the particulate can be of the expanded type.

In its preferred formulation, said particulate further comprises the following components:
- process oil in a quantify from 2 to 10% by weight of the particulate,
- exothermic and/or endothermic physical and/or chemical expanding agents, in a quantity from 0.2% to 4% by weight of the particulate,
- thermal stabilization additives,
- oxidative stabilization additives,
- color master batches.

The particulate according to the invention has an irregular shape and a bulk density comprised between 0.40 g/ml and 0.80 g/ml.

Due to all these characteristics, the material that constitutes the particulate according to the invention has a higher resistance to abrasion and elasticity than comparable known materials used for the same purpose, as will become better apparent hereinafter from the description of comparison examples.

In order to provide the suitable irregular shape of the particulate, the invention provides a manufacturing method which comprises the following steps:
- mixing the components of the particulate,
- extruding the mixed compound,
- cutting into cylinders the filaments of extruded mixed compound,
- breaking up the cylinders so as to provide particulate having an irregular shape.

The breakup of the cylinders occurs by means of a conventional rotary-blade grid mill with water cooling, of a per se known type.

Extrusion is provided by means of a co-rotating twin-screw extruder.

The summary tables of three different examples of composition of particulate according to the invention are given hereafter, illustrating the corresponding physical-mechanical properties that are interesting in order to highlight the improvements of the invention.

The units of measure and the standards used in the measurement of these physical and mechanical properties are summarized in the following table.

| PROPERTY | DIN STANDARD | ASTM STANDARD | Unit of measure |
|---|---|---|---|
| Density | 53457 | D 792 | g/ml |
| Bulk density | - | - | g/ml |
| Hardness | 53505 | D 2240 | Shore A |
| Load at 100% | 53504 | D 638 | MPa |
| Load at 300% | 53504 | D 638 | MPa |
| Breaking load | 53504 | D 638 | MPa |
| Elongation | 53504 | D 638 | % |
| Abrasion resistance | 53516 | - | mm³ |

Bulk density is calculated after milling the particulate according to an internal method.

In all of the examples listed below, the thermoplastic polyurethane that is used is of the type based on ester and/or ether, with a hardness comprised between 82 and 84 Shore A, while the method for producing the particulate is the same as the one described earlier.

| COMPONENTS(pp) | Example 1 | Example 2 | Example 3 |
|---|---|---|---|
| Thermoplastic polyurethane | 370 | 370 | 370 |
| Compatibilizing styrene copolymers | 120 | 120 | 120 |
| Process oil | 100 | 100 | 100 |
| Mineral filler | 600 | 400 | 400 |
| Thermal and oxidative stabilization additives | 1.2 | 1.2 | 1.2 |
| Plasticizer | - | - | - |

The physical and mechanical properties are summarized in the following table.

| Property | Example | Example 2 | Example 3 |
|---|---|---|---|
| Density | 1.5 | 1.38 | 1.41 |
| Bulk density | 0.75 | 0.60 | 0.68 |
| Hardness | 88 | 86 | 85 |
| Load at 100% | 4.0 | 4.7 | 4.6 |
| Load at 300% | - | 5.0 | 5.1 |
| Breaking load | 14.5 | 6 | 5.6 |
| Elongation | 200 | 420 | 360 |
| Abrasion resistance | 370 | 270 | 315 |

The summary tables of four different comparison examples of composition of particulate currently used as an infill for synthetic turfs are given below.

The corresponding tables illustrating their physical and mechanical properties are given next to them.

For the sake of comparison, the method for production of the particulate is the same as the one related to the invention and described earlier.

| COMPONENTS(pp) | Example 4 | Example 5 | Example 6 | Example 7 |
|---|---|---|---|---|
| SBS styrene copolymer | 50 | 50 | - | 50 |
| SEBS styrene copolymer | 50 | 50 | 100 | 50 |
| Polypropylene | 38 | 25 | - | 38 |
| EVA | 10 | 10 | 110 | 10 |
| Process oil | 120 | 135 | 180 | 120 |
| Mineral filler | 510 | 510 | 700 | 510 |
| Thermal and oxidative stabilization additives | 22 | 22 | 30 | 22 |
| Expanding agent | - | - | - | 40 |

The physical and mechanical properties are summarized in the following table.

| Property | Example 4 | Example 5 | Example 6 | Example 7 |
|---|---|---|---|---|
| Density | 1.55 | 1.57 | 1.56 | 1.55 |
| Bulk density | 0.79 | 0.79 | 0.92 | 0.49 |
| Hardness | 75 | 64 | 73 | 75 |
| Load at 100% load | 2.5 | 2.0 | 2.3 | 2.5 |
| Load at 300% | 2.5 | - | 2.3 | 2.5 |
| Breaking load | 2.6 | 2.0 | 2.6 | 2.6 |
| Elongation | 170 | 240 | 700 | 700 |
| Abrasion resistance | 690 | > 700 | 586 | > 700 |

As can be seen by comparing the results of the physical and mechanical properties of Examples 1-3, which relate to particulate having the composition according to the invention, with Examples 4-7 related to particulate having a known composition, it can be seen that both the density and the bulk density are lower in the case of thermoplastic polyurethane.

In particular, the bulk density is comprised between 0.40 g/ml and 0.80 g/ml.

This allows to have lower specific gravities and high elasticity.

The higher elasticity is also indicated by the higher values of the load at 100%, 300%, and at breaking load, and of elongation.

The elasticity and bulk density do not compromise the hardness of the particulate, which is instead increased with respect to known examples of particulate.

Accordingly, the particulate does not collapse under the weight of the athletes, thus ensuring a longer life of said particulate.

Also as regards resistance to abrasion, it can be seen that the particulate according to the invention has much lower values than known particulates, in particular values lower than 400 mm³ (according to the DIN 53516 standard), and therefore a very high resistance. Therefore, no dust forms, at the same time increasing the life of the particulate.

The fact of having an irregular form factor allows the particulate to compact itself well among the tufted synthetic fibers of the synthetic turf and to not be lifted when the athletes tread it.

The particulate according to the invention is perfectly recyclable.

As can be seen in the examples related to the particulates having a known composition, the use of expanding agent (example 7) in the mixture that composes the particulate leads to a reduction of the value of bulk density.

In practice it has been found that the invention thus described solves the problems noted in known types of particulate suitable to be used as an infill for synthetic turfs; in particular, the present invention provides an elastomerized particulate suitable to be used as an infill for synthetic turfs which has high resistance to abrasion, optimum elasticity and an irregular shape which ensures good compaction on the ground.

## Claims

1. An elastomerized particulate, suitable to be used as an infill for synthetic turfs, **characterized in that** it is made of elastomerized thermoplastic polyurethane, has an irregular shape, and has a bulk density comprised between 0.40 g/ml and 0.80 g/ml, said particulate comprising the following materials:
- an ester- and/or ether-based polyurethane in a quantity from 10 to 70% by weight of the particulate,
- styrene-based compatibilized elastomerizing derivatives, in an amount from 5 to 20% by weight of the particulate,
- mineral fillers in an amount from 10 to 60% by weight of the particulate.

2. The particulate according to claim 1, **characterized in that** it has an abrasion resistance of less than 400 mm³ according to the DIN 53516 standard.

3. The particulate according to one or more of the preceding claims, **characterized in that** said thermoplastic polyurethane is expanded.

4. The particulate according to claim 1, **characterized in that** it also comprises one or more of the following components:
- process oil in a quantity from 2 to 10% by weight of the particulate,
- exothermic and/or endothermic physical and/or chemical expanding agents in a quantity from 0.2 to 4% by weight of the particulate,
- thermal stabilization additives,
- oxidative stabilization additives,
- color master batches.

5. A method for producing particulate made of elastomerized thermoplastic polyurethane to be used to provide infill particulate for synthetic turfs, according to anyone of the preceding claims **characterized in that** it comprises the steps of:
- mixing the components of the particulate,
- extruding the mixed compound,
- cutting into cylinders the filaments of extruded mixed compound,
- breaking up said cylinders so as to provide particulate having an irregular shape.

6. The method according to claim 5, **characterized in that** said breakup of said cylinders occurs by means of a conventional rotary-blade grid mill.

## Patentansprüche

1. Ein elastomeres Partikel, das geeignet ist, als Füllung für synthetischen Rasensoden verwendet zu werden, **dadurch gekennzeichnet, dass** es aus elastomerem thermoplastischem Polyurethan besteht, eine unregelmäßige Form hat und eine Schüttdichte zwischen 0,40 g/ml und 0,80 g/ml hat, wobei das Partikel folgende Materialien umfasst:
- ein Polyurethan auf Ester- und/oder Ether-Basis, in einer Menge von 10 bis 70 Gewichtsprozent des Partikels,
- kompatibel gemachte elastomere Derivate auf Styrolbasis in einer Menge von 5 bis 20 Gewichtsprozent des Partikels,
- Mineralfüllstoffe in einer Menge von 10 bis 60 Gewichtsprozent des Partikels.

2. Das Partikel gemäß Anspruch 1, **dadurch gekennzeichnet, dass** es einen Verschleißwiderstand von weniger als 400 mm³ nach der DIN 53516-Norm hat.

3. Das Partikel gemäß einem oder mehreren der obigen Ansprüche, **dadurch gekennzeichnet, dass** das thermoplastische Polyurethan geschäumt ist.

4. Das Partikel gemäß Anspruch 1, **dadurch gekennzeichnet, dass** es auch eine oder mehrere der folgenden Komponenten umfasst:
- Weichmacheröl in einer Menge von 2 bis 10 Gewichtsprozent des Partikels,
- exotherme und/oder endotherme physikalische und/oder chemische Treibmittel in einer Menge von 0,2 bis 4 Gewichtsprozent des Partikels,
- thermische Stabilisierungszusatzstoffe,
- oxidative Stabilisierungszusatzstoffe,
- Farb-Vormischungen.

5. Ein Verfahren zur Herstellung eines Partikels aus elastomerem thermoplastischem Polyurethan, zur Verwendung, um Füllpartikel für synthetischen Rasensoden bereitzustellen, gemäß einem beliebigen der obigen Ansprüche, **dadurch gekennzeichnet, dass** es folgende Schritte umfasst:
- Mischen der Komponenten des Partikels,
- Extrudieren der gemischten Verbindung,
- Schneiden der Filamente der extrudierten gemischten Verbindung in Zylinder,
- Aufbrechen der Zylinder, um Partikel mit einer unregelmäßigen Form bereitzustellen.

6. Das Verfahren gemäß Anspruch 5, **dadurch gekennzeichnet, dass** das Aufbrechen der Zylinder mit Hilfe einer herkömmlichen Schneidrad-Zerkleinerungsmaschine durchgeführt wird.

## Revendications

1. Particule élastomérisé approprié à une utilisation comme remplissage pour des gazons synthétiques, **caractérisée en ce qu'**elle est réalisée en polyuréthane thermoplastique élastomérisé, **en ce qu'**elle présente une forme irrégulière et une densité apparente comprise entre 0,40 g/ml et 0,80 g/ml, ladite particule comprenant les matières suivantes :
- un polyuréthane à base d'ester et/ou d'éther dans une quantité allant de 10 à à 70% en poids de la particule,
- des dérivés élastomérisants compatibilisés à base de styrène dans une quantité allant de 5 à 20% en poids de la particule,
- des matières de charge minérales dans une quantité allant de 10 à 60% en poids de la particule.

2. Particule suivant la revendication 1, **caractérisée en ce qu'**elle présente une résistance à l'abrasion de moins de 400 mm³ selon la norme DIN 53516.

3. Particule suivant une ou plusieurs des revendications précédentes, **caractérisée en ce que** ledit polyuréthane thermoplastique est expansé.

4. Particule suivant la revendication 1, **caractérisée en ce qu'**elle comprend également un ou plusieurs des composants suivants :
- huile de procédé dans une quantité allant de 2 à 10% en poids de la particule
- agents gonflants physiques et/ou chimiques, exothermiques et/ou endothermiques dans une quantité allant de 0,2 à 4% en poids de la particule,
- additifs stabilisants thermiques,
- additifs stabilisants oxydatifs,
- prémélanges de colorants.

5. Procédé de fabrication d'une particule réalisé dans un polyuréthane thermoplastique élastomérisé, destiné à fournir une particule de remplissage pour des gazons synthétiques suivant une quelconque des revendications précédentes, **caractérisé en ce qu'**il comprend les étapes suivantes:
- mélange des composants de la particule,
- extrusion de la composition mélangée,
- découpage des filaments de la composition mélangée extrudée en cylindres,
- désagrégation desdits cylindres de manière à donner une forme irrégulière à la particule.

6. Méthode suivant la revendication 5, **caractérisée en ce que** la désagrégation desdits cylindres a lieu au moyen d'un broyeur à lames rotatives conventionnel.
